# EUROPEAN PATENT SPECIFICATION

(11) **EP 0 888 650 B1**
(45) Date of publication and mention of the grant of the patent: **15.09.1999**
(21) Application number: 97915393.9
(22) Date of filing: 19.03.1997
(51) Int. Cl.: H01R 13/623

(54) **AN ELECTRICAL CONNECTOR PLUG, IN PARTICULAR FOR THE ELECTRICAL CONNECTION BETWEEN A TOWING VEHICLE AND A TRAILER**
EIN ELEKTRISCHER STECKVERBINDER INSBESONDERE FÜR DIE ELEKTRISCHE VERBINDUNG ZWISCHEN EINEM SCHLEPPER UND EINEM ANHÄNGER
PRISE FEMELLE DE CONNECTEUR ELECTRIQUE SERVANT EN PARTICULIER AUX CONNEXIONS ELECTRIQUES ENTRE UN VEHICULE TRACTEUR ET SA REMORQUE

(30) Priority: 22.03.1996 IT TO960057 U
(43) Date of publication of application: 07.01.1999
(73) Proprietor: MENBER'S S.p.A., 37045 Legnago (IT)
(72) Inventor: PASOTTO, Giorgio, I-37045 Legnago (IT)
(74) Representative: Marchitelli, Mauro
(86) International application number: EP9701378
(87) International publication number: WO9736347

(56) References cited:
- DE-C- 3 248 154
- FR-A- 2 300 435
- GB-A- 1 520 387
- US-A- 3 585 323

## Description

The present invention relates to a plug for an electrical connector, in particular for the electrical connection between a towing vehicle and a trailer.

More particularly, the invention relates to a plug according to the precharacterising portion of claim 1, which is known from GB-A-1 520 387. This document shows a plug connector member comprising a housing and a contact carrier which are connected to each other by means of a bayonet joint including outwardly protruding ramps on the contact carrier cooperating with mating ramps on the inside surface of the housing.

FR-A-2 300 435 shows an electrical connector comprising a female member inserted into a male member. The female member has a projection on its inner surface, which cooperates with a lug radially projecting from the male member.

The object of the present invention is that of making a plug of the above specified type simpler and more economical.

According to the invention this object is achieved by a plug having the characteristics forming the subject of the claims.

Further characteristics and advantages of the present invention will become apparent during the course of the following detailed description, given purely by way of non-limitative example, with reference to the attached drawings, in which:
Figure 1 is a perspective view of a plug according to the invention;
Figure 2 is an exploded perspective view of the plug of Figure 1;
Figures 3 to 6 are front elevation views seen from the direction of the arrow III of Figure 1, illustrating the assembly sequence of the plug according to the invention; and
Figure 7 is a section on an enlarged scale taken on the section line VII-VII of Figure 6.

With reference to the drawings, the reference numeral 10 indicates a plug for an electrical connector, comprising a casing 12, a contact-carrier body 14 and a protective cap 16.

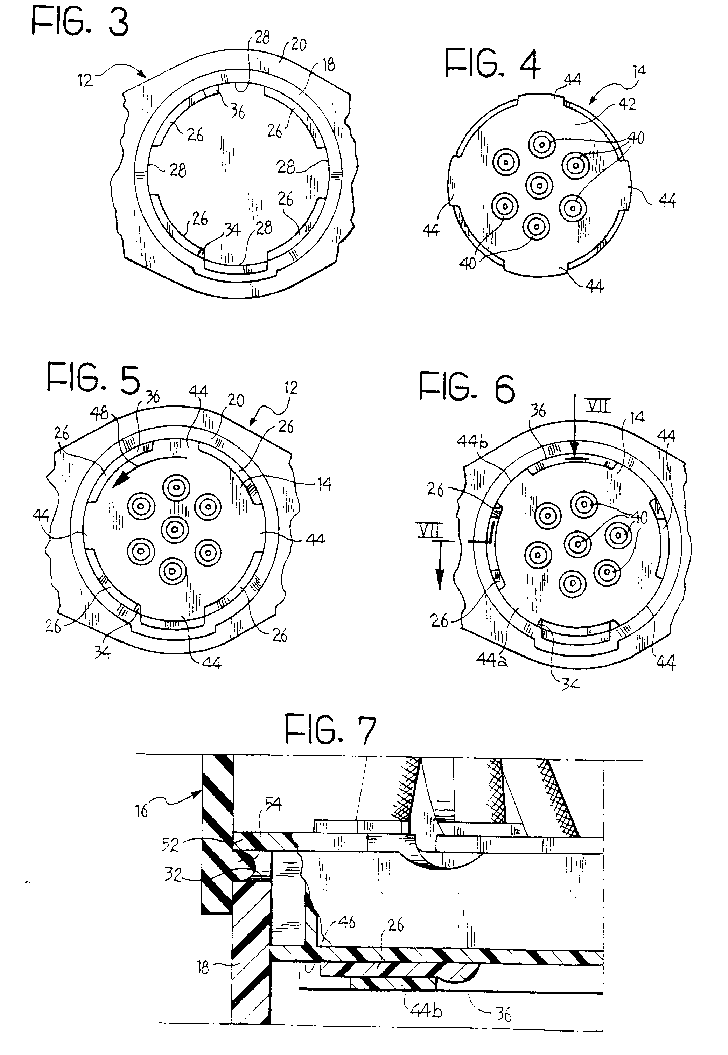

The casing 12 has a tubular portion 18 fixed to a flange 20 provided with fixing holes 22. A tubular portion 18 has a cylindrical internal surface 24 from which a plurality of sectors 26 project radially inwardly. The sectors 26 are circumferentially spaced from one another in such a way as to define a series of passage zones 28 (see in particular Figure 3). The sectors 26 have flat front and rear faces respectively facing the front aperture 30 and the rear aperture 32 of the tubular portion 18.

As can be seen in particular in Figure 3, on the front face of one of the sectors 26 there is formed a stop projection 34. Another sector 26 has on its front face a ramp-shaped projection 36 the function of which will become clear hereinafter.

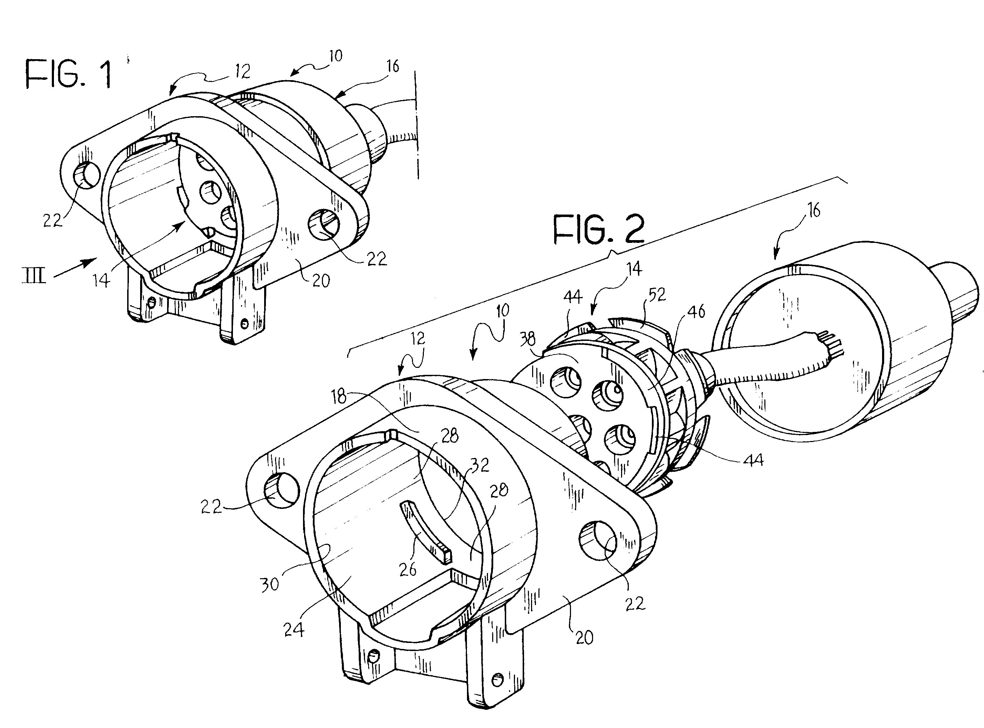

Referring now to Figures 2 and 4, the contact-carrier body 14 is constituted by a single piece of injection moulded plastics material in which are formed a plurality of cavities indicated 38 in Figure 2, for receiving respective contacts indicated 40 in Figure 4. The contact-carrier body 14 has a flat front surface 42 on the edge of which are formed a plurality of perimetral lugs 44. In a position slightly back from the perimetral lugs 44 the contact-carrier body 14 has an annular stop collar 46. Between the perimetral lugs 44 and the stop collar 46 is defined a groove the axial dimension of which is about equal to the thickness of the sectors 26 of the casing 12.

The contact-carrier body 14 of the casing 12 is assembled in the following manner.

First, as illustrated in Figure 5, the contact-carrier body 14 is introduced into the tubular part 18 of the casing 12 starting from the rear aperture 32 by aligning the perimetral lugs 44 with the passage zones 28 provided between each pair of adjacent sectors 26. The axial movement of the contact-carrier body 14 with respect to the casing 12 stops when the annular collar 46 comes into contact against the rear faces of the sectors 26.

At this point the contact-carrier body 14 is caused to rotate in the sense indicated by the arrow 48 in Figure 5. To perform this rotation it is necessary to overcome a predetermined resistant couple because the ramp projection 36 must be made to pass over the perimetral lug 44 and to achieve this it is necessary to cause a slight flexing of the perimetral lug 44.

As is illustrated in Figure 6 the rotation of the contact-carrier body 14 ends when the perimetral lug 44a comes into contact against the stop projection 34. In this position the perimetral lug 44b has passed completely over the ramp-shaped projection 36 (see also Figure 7) which constitutes an abutment stop against rotation of the contact-carrier body 14 in the opposite sense from that in which assembly takes place.

Dismantling of the contact-carrier body 14 can be effected simply by making the contact-carrier body 14 rotate in the sense indicated by the arrow 50 in Figure 6 and by applying a couple sufficient to allow the perimetral lug 44b to pass over the ramp projection 36.

Another advantageous characteristic of the plug according to the invention is that the contact-carrier body 14 has an annular rear wall 52 (Figures 2 and 7) which, when the plug is assembled, remains slightly spaced from the front edge of the rear aperture 32 of the tubular part 18. In this way the annular groove defined between the wall 52 and the edge 32 (Figure 7) can advantageously be utilised for engagement of an anchoring rib 54 of the protective cap 16.

## Claims

1. A plug for an electrical connector, in particular for the electrical connection between a towing vehicle and a trailer, comprising :
- a casing (12) having a tubular portion (18) with an inner surface (24) radially inwardly from which project a plurality of sectors (26) having respective front abutment faces, the sectors (26) being circumferentially spaced from one another in such a way as to define a plurality of axial passage zones (28), and
- a contact-carrier body (14) having a plurality of perimetral lugs (44) provided with respective rear front faces disposed in such a way that upon introducing the contact carrier body (14) through a rear aperture (32) of the casing (12) the perimetral lugs (44) pass axially through the said axial passage zones (28) and move in front of the said radial sectors (26) so that following a relative rotation of the contact carrier body (14) and the casing (12) the rear faces of the perimetral lugs (44j come into contact with the front faces of the radial sectors (26) preventing rearward separation of the contact carrier body (14),
characterised in that the front face of at least one of said sectors (26) is formed with a ramp-shaped projection (36) constituting an abutment stop for at least one of said perimetral lugs (44), the ramp-shaped projection being able to pass over the associated perimetral lug (44) in both senses of rotation by applying to the contact carrier body (14) a couple greater than a predetermined value, the contact carrier body (14) having an annular stop collar (46) rearwardly distanced by the perimetral lugs (44) so as to define a perimetral groove the axial dimension of which is about equal to the thickness of the sectors (26) of the casing.

2. A plug according to Claim 1, characterised in that the contact-carrier body (14) has a circumferential collar (52) which, in the assembled position of the contact-carrier body (14) faces and is axially spaced from a face (32) of the said tubular portion (18) of the casing (12) in such a way as to provide a circumferential groove serving for anchoring a protective cap (16).

## Patentansprüche

1. Stecker für einen elektrischen Verbinder, insbesondere für die elektrische Verbindung zwischen einem Schlepper und einem Anhänger, umfassend:
- ein Gehäuse (12) aufweisend einen rohrförmigen Abschnitt (18) mit einer Innenfläche (24), aus der radial nach innen eine Vielzahl von Segmenten (26) mit jeweils vorderen Auflagerstirnseiten heraussteht, wobei die Segmente (26) umfangsmäßig derart voneinander beabstandet sind, daß sie eine Vielzahl axialer Durchgangszonen (28) definieren, und
- einen Kontaktträgerkörper (14) mit einer Vielzahl über den Umfang verteilter Nasen (44), die jeweils mit rückwärtigen Stirnseiten versehen sind, die derart angeordnet sind, daß die über den Umfang verteilten Nasen (44) bei Einführen des Kontaktträgerkörpers (14) durch einen rückwärtigen Ausschnitt (32) des Gehäuses (12) axial durch die radialen Durchgangszonen (28) hindurchgehen und sich vor die radialen Segmente (26) schieben, so daß einer Drehbewegung des Kontaktträgerkörpers (14) bezüglich des Gehäuses (12) folgend die rückwärtigen Stirnflächen der über den Umfang verteilten Nasen (44) mit den vorderen Stirnflächen der radialen Segmente (26) in Kontakt gelangen und eine Trennung des Kontaktträgerkörpers (14) nach hinten verhindern,
dadurch gekennzeichnet, daß
die vordere Stirnseite zumindest eines der Segmente (26) mit einer gleitschienenartigen Auskragung (36) ausgebildet ist, die einen Wangenanschlag für zumindest eine der über den Umfang verteilten Nasen (44) bildet, wobei die gleitschienenförmige Auskragung in beiden Drehrichtungen über die zugeordnete Umfangsnase (44) gestreift werden kann, indem ein Kräftemoment auf den Kontaktträgerkörper (14) ausgeübt wird, das größer ist als ein vorbestimmter Wert, wobei der Kontaktträgerkörper (14) einen Ringanschlagbund (46) aufweist, der durch die über den Umfang verteilten Nasen (44) nach hinten beabstandet ist, so daß er eine Umfangsnut definiert, deren axiale Abmessung ungefähr gleich der Dicke der Segmente (26) des Gehäuses ist.

2. Stecker nach Anspruch 1, dadurch gekennzeichnet, daß der Kontaktträgerkörper (14) einen Umfangsbund (52) aufweist, der in zusammengesetzter Stellung des Kontaktträgerkörpers (14) einer Aufsitzbacke (32) des rohrförmigen Abschnitts (18) des Gehäuses (12) zugewandt und davon derart axial beabstandet ist, daß er eine Umfangsnut bereitstellt, die zur Verankerung einer Schutzkappe (16) dient.

## Revendications

1. Prise électrique pour connecteur électrique, en particulier destinée à assurer la connexion électrique entre un véhicule tracteur et une remorque, comprenant :
un carter (12) ayant une partie tubulaire (18) qui a une surface interne (24) placée radialement vers l'intérieur et dont dépassent plusieurs secteurs (26) ayant des faces avant respectives de butée, les secteurs (26) étant espacés circonférentiellement les uns par rapport aux autres de manière qu'ils délimitent plusieurs zones axiales (28) de passage, et
un corps (14) de support de contacts ayant plusieurs pattes périphériques (44) possédant des faces avant-arrière respectives disposées de manière que, lors de l'introduction du corps (14) de support de contacts par un orifice arrière (32) du carter (12), les pattes périphériques (44) passent axialement dans les zones axiales (28) de passage et se déplacent en avant des secteurs radiaux (26) afin que, après une rotation relative du corps (14) de support de contacts et du carter (12), les faces arrière des pattes périphériques (44) viennent au contact des faces avant des secteurs radiaux (26) en empêchant une séparation vers l'arrière du corps (14) de support de contacts,
caractérisée en ce que la face avant de l'un au moins des secteurs (26) est formée avec une saillie (26) ayant la configuration d'une rampe et constituant un organe d'arrêt de butée pour l'une au moins des pattes périphériques (44), la saillie en forme de rampe pouvant passer sur la patte périphérique associée (44) dans les deux sens de rotation par application au corps (14) de support de contacts d'un couple supérieur à une valeur prédéterminée, le corps (14) de support de contacts ayant un collier annulaire d'arrêt (46) placé vers l'arrière à une certaine distance des pattes périphériques (44) afin qu'il délimite une gorge périphérique dont la dimension axiale est approximativement égale à l'épaisseur des secteurs (26) du carter.

2. Prise selon la revendication 1, caractérisée en ce que le corps (14) de support de contacts a un collier circonférentiel (52) qui, dans la position assemblée du corps (14) de support de contacts, est tourné vers une face (32) de la partie tubulaire (18) du carter (12) et est distant axialement de cette face d'une manière telle qu'une gorge circonférentielle est réalisée et est utilisée pour l'ancrage d'un capuchon protecteur (16).
